# EUROPEAN PATENT APPLICATION

(11) **EP 3 890 064 A1**
(43) Date of publication of application: **06.10.2021**
(21) Application number: 19888923.0
(22) Date of filing: 19.09.2019
(51) Int. Cl.: H01M 4/139, H01G 11/06, H01G 11/50, H01G 11/84

(54) **ELECTRODE PRODUCTION METHOD, METHOD FOR PRODUCING ELECTRICITY STORAGE DEVICE, AND ELECTRODE PRODUCTION APPARATUS**

(30) Priority: 28.11.2018 JP 2018222469
(71) Applicant: Musashi Energy Solutions Co., Ltd., Hokuto-shi, Yamanashi 409-1501 (JP)
(72) Inventor: OTANI, Shinya, Hokuto-shi, Yamanashi 409-1501 (JP); NANSAKA, Kenji, Hokuto-shi, Yamanashi 409-1501 (JP); AONO, Shintarou, Hokuto-shi, Yamanashi 409-1501 (JP); FUKUNAGA, Kouichi, Hokuto-shi, Yamanashi 409-1501 (JP); AITA, Kazunari, Tokyo 105-8640 (JP)
(74) Representative: TBK
(86) International application number: PCT/JP2019/036786
(87) International publication number: WO 2020/110433

(57) **Abstract**

The electrode manufacturing method for manufacturing an electrode provided with an active material layer that contains an active material doped with alkali metal. In an atmosphere with an oxygen concentration of 1 volume% or more and 18 volume% or less, the active material is doped with alkali metal using a dope solution containing alkali metal ions. In a manufacturing method for a power storage device, a negative electrode active material contained in a negative electrode active material layer of a negative electrode is doped with alkali metal using a dope solution containing alkali metal ions in an atmosphere with an oxygen concentration of 1 volume% or more and 18 volume% or less. After the doping with alkali metal, the negative electrode, a separator, and an electrode different from the negative electrode are sequentially stacked to form the electrode cell.

## Description

### CROSS-REFERENCE TO RELATED APPLICATION

This international application claims the benefit of Japanese Patent Application No. 2018-222469 filed on November 28, 2018 with the Japan Patent Office, and the entire disclosure of Japanese Patent Application No. 2018-222469 is incorporated in the present international application by reference.

### TECHNICAL FIELD

The present disclosure relates to an electrode manufacturing method, a manufacturing method for a power storage device, and an electrode manufacturing apparatus.

### BACKGROUND ART

In recent years, as the size and weight of electronic devices have been remarkably reduced, demands for downsizing and weight reduction have been further increased also for batteries used as power sources for driving the electronic devices.

In order to satisfy the demands for downsizing and weight reduction, nonaqueous electrolyte rechargeable batteries, typified by lithium ion rechargeable batteries, have been developed. Further, lithium ion capacitors have been known as power storage devices adapted for applications that require high energy density characteristics and high output characteristics. In addition, sodium ion type batteries and capacitors using sodium which is lower in cost and richer in resources than lithium have also been known.

In such batteries and capacitors, a process of doping an electrode with alkali metal in advance (generally referred to as pre-doping) has been adopted for various purposes. For example, there are a sheet-type method and a continuous type method for pre-doping an electrode with alkali metal. In the sheet-type method and the continuous type method, pre-doping is performed outside a power storage device. In the sheet-type method, pre-doping is performed in a state in which a cut electrode plate and an alkali metal plate are disposed in a dope solution via a separator. In the continuous type method, pre-doping is performed while a strip-shaped electrode plate is transferred in a dope solution. The sheet-type method is disclosed in Patent Documents 1 and 2. The continuous type method is disclosed in Patent Documents 3 to 6.

### PRIOR ART DOCUMENTS

### PATENT DOCUMENTS

Patent Document 1: JPH9-293499 A
Patent Document 2: JP 2012-069894 A
Patent Document 3: JPH10-308212 A
Patent Document 4: JP 2008-077963 A
Patent Document 5: JP 2012-049543 A
Patent Document 4: JP 2012-049544 A

### SUMMARY OF THE INVENTION

### PROBLEMS TO BE SOLVED BY THE INVENTION

The dope solution used in the sheet-type method and the continuous type method is flammable. Also, in the sheet-type method and the continuous type method, pre-doping is performed while flowing an electric current through the electrode. If the electrode breaks, or sparks occur in a conveyer member of the electrode, there is a fear that the dope solution may be ignited.

In one aspect of the present disclosure, it is desirable to provide an electrode manufacturing method, a manufacturing method for a power storage device, and an electrode manufacturing apparatus that can suppress ignition of a dope solution.

### MEANS FOR SOLVING THE PROBLEMS

One aspect of the present disclosure provides an electrode manufacturing method for manufacturing an electrode provided with an active material layer that contains an active material doped with alkali metal. The electrode manufacturing method comprises doping the active material with alkali metal using a dope solution containing alkali metal ions in an atmosphere with an oxygen concentration of 1 volume% or more and 18 volume% or less. According to the electrode manufacturing method in one aspect of the present disclosure, ignition of the dope solution can be suppressed.

Another aspect of the present disclosure provides a manufacturing method for a power storage device that comprises an electrode cell. The manufacturing method for a power storage device comprises doping, with alkali metal, a negative electrode active material contained in a negative electrode active material layer of a negative electrode using a dope solution containing alkali metal ions in an atmosphere with an oxygen concentration of 1 volume% or more and 18 volume% or less, and after the doping with alkali metal, sequentially stacking the negative electrode, a separator, and an electrode different from the negative electrode to form the electrode cell. According to the manufacturing method for a power storage device in another aspect of the present disclosure, ignition of the dope solution can be suppressed.

Still another aspect of the present disclosure provides an electrode manufacturing apparatus that manufactures an electrode provided with an active material layer that contains an active material doped with alkali metal. The electrode manufacturing apparatus comprises an atmosphere setting part configured to set an atmosphere inside the electrode manufacturing apparatus to have an oxygen concentration of 1 volume% or more and 18 volume% or less. According to the electrode manufacturing apparatus in still another aspect of the present disclosure, ignition of the dope solution can be suppressed.

### BRIEF DESCRIPTION OF THE DRAWINGS

FIG. 1 is an explanatory view showing a configuration of an electrode manufacturing apparatus.
FIG. 2 is an explanatory view showing a state in which an electrolyte solution tank is moved downward.
FIG. 3 is an explanatory diagram showing an electrical configuration of the electrode manufacturing apparatus.
FIG. 4 is a side sectional view showing a configuration of counter electrode members and a porous insulating member.
FIG. 5 is a plan view showing a configuration of an electrode precursor.
FIG. 6 is a sectional view taken along a cross-section VI-VI in FIG. 5.

### EXPLANATION OF REFERENCE NUMERALS

1...electrode manufacturing apparatus, 10...chamber, 7, 203, 205, 207...electrolyte solution tank, 9, 11, 13, 15, 17, 19, 21, 23, 25, 27, 29, 31, 305, 307, 109, 311, 313, 315, 317, 119, 321, 323, 33, 35, 37, 39, 41, 43, 45...conveyer roller, 47...supply roll, 49...winding roll, 51, 52, 54...counter electrode member, 53...porous insulating member, 55...supporting table, 57...circulation filter, 61, 62, 64...direct current power source, 63...blower, 66...power controller, 67, 68, 70...supporting rod, 69...partition plate, 71...space, 73...electrode precursor, 75...electrode, 77...conductive base material, 79...alkali metal containing plate, 81...filter, 83...pump, 85...piping, 87, 89, 91, 93, 97, 99...cable, 93...current collector, 95...active material layer, 101...CPU, 103...cleaning tank, 105...memory

### MODE FOR CARRYING OUT THE INVENTION

Example embodiments of the present disclosure will be described with reference to the drawings.

### <First Eembodiment>

### 1. Configuration of Electrode Manufacturing Apparatus 1

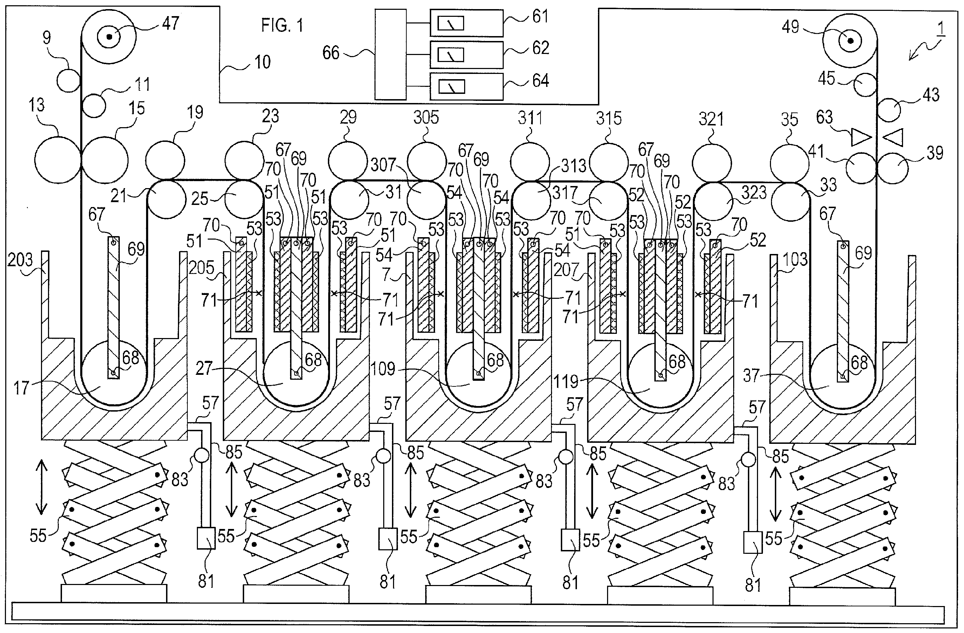

The configuration of an electrode manufacturing apparatus 1 will be described based on FIGS. 1 to 4. As shown in FIG. 1, the electrode manufacturing apparatus 1 comprises a chamber 10, electrolyte solution tanks 203, 205, 7, 207, a cleaning tank 103, conveyer rollers 9, 11, 13, 15, 17, 19, 21, 23, 25, 27, 29, 31, 305, 307, 109, 311, 313, 315, 317, 119, 321, 323, 33, 35, 37, 39, 41, 43, 45 (hereinafter also collectively referred to as a conveyer roller group), a supply roll 47, a winding roll 49, counter electrode members 51, 52, 54, a porous insulating member 53, a supporting table 55, a circulation filter 57, three direct current power sources 61, 62, 64, a blower 63, and a power controller 66.

The chamber 10 accommodates the electrolyte solution tanks 203, 205, 7, 207, the cleaning tank 103, the conveyer roller group, the supply roll 47, the winding roll 49, the counter electrode members 51, 52, 54, the porous insulating member 53, the supporting table 55, the circulation filter 57, and the blower 63 therein.

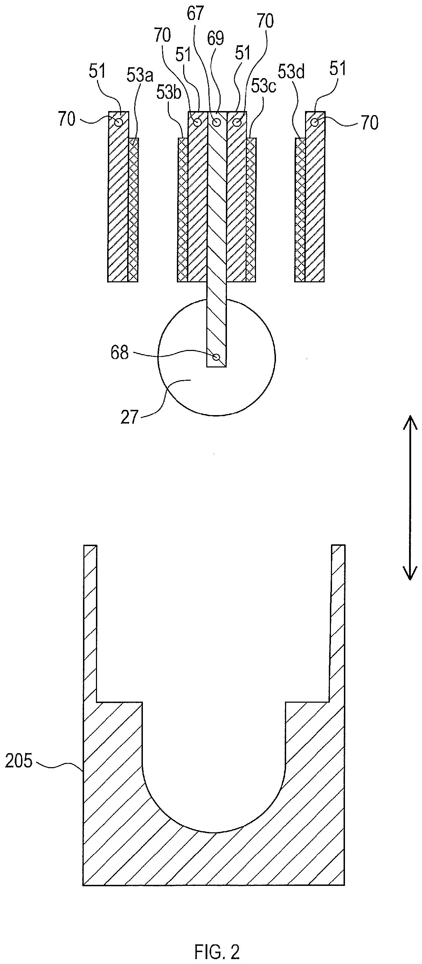

The electrolyte solution tank 205, as shown in FIGS. 1 and 2, is a rectangular tank with an open top. The bottom surface of the electrolyte solution tank 205 has an approximately U-shaped cross-section. In the electrolyte solution tank 205, there are a partition plate 69, four counter electrode members 51, four porous insulating members 53, and the conveyer roller 27. As shown in FIG. 2, the four porous insulating members 53 include 53a, 53b, 53c, and 53d.

The partition plate 69 is supported by a supporting rod 67 penetrating the upper end of the partition plate 69. The supporting rod 67 is secured to a wall and the like, which is not shown. The partition plate 69, except for the upper end thereof, is located inside the electrolyte solution tank 3. The partition plate 69 extends in an up-down direction and divides the interior of the electrolyte solution tank 205 into two spaces. The conveyer roller 27 is attached to the lower end of the partition plate 69. The partition plate 69 and the conveyer roller 27 are supported by the supporting rod 68 penetrating the partition plate 69 and the conveyer roller 27. The partition plate 69 is notched in the vicinity of the lower end thereof so as not to contact the conveyer roller 27. There is a space between the conveyer roller 27 and the bottom surface of the electrolyte solution tank 205.

The four counter electrode members 51 are each supported by the corresponding supporting rods 70 penetrating the upper ends of the counter electrode members 51 and extend in the up-down direction. The supporting rods 70 are secured to a wall and the like, which is not shown. The counter electrode members 51, except for the upper ends thereof, are located inside the electrolyte solution tank 205. Two of the four counter electrode members 51 are disposed to hold the partition plate 69 from both sides. The remaining two counter electrode members 51 are disposed along the inner surface of the electrolyte solution tank 205.

As shown in FIG. 1, there are spaces 71 between the counter electrode members 51 disposed beside the partition plate 69 and the counter electrode members 51 disposed along the inner surface of the electrolyte solution tank 205. The counter electrode members 51 are connected to the positive pole of the direct current power source 61. The detailed configuration of the counter electrode members 51 will be described later.

The porous insulating members 53 are attached to the surfaces of the respective counter electrode members 51 on the sides of the spaces 71. The detailed configuration of the porous insulating member 53 will be described later.

The electrolyte solution tank 203 has basically the same configuration as that of the electrolyte solution tank 205. However, the counter electrode member 51 and the porous insulating member 53 do not exist in the electrolyte solution tank 203. In addition, there is a conveyer roller 17 in the electrolyte solution tank 203 in place of the conveyer roller 27. The conveyer roller 17 is substantially the same as the conveyer roller 27.

The electrolyte solution tank 7 has basically the same configuration as that of the electrolyte solution tank 205. However, there are four counter electrode members 54 and a conveyer roller 109 in the electrolyte solution tank 7 in place of the four counter electrode members 51 and the conveyer roller 27. The four counter electrode members 54 are substantially the same as the four counter electrode members 51. The conveyer roller 109 is substantially the same as the conveyer roller 27. The counter electrode members 54 are connected to the positive pole of the direct current power source 62.

The electrolyte solution tank 207 has the same configuration as that of the electrolyte solution tank 205. However, there are four counter electrode members 52 and a conveyer roller 119 in the electrolyte solution tank 207 in place of the four counter electrode members 51 and the conveyer roller 27. The four counter electrode members 52 are substantially the same as the four counter electrode members 51. The conveyer roller 119 is substantially the same as the conveyer roller 27. The counter electrode members 52 are connected to the positive pole of the direct current power source 64.

The cleaning tank 103 has the same configuration as that of the electrolyte solution tank 205. However, there are no counter electrode member 51 and porous insulating member 53 in the cleaning tank 103. In addition, there is a conveyer roller 37 in the cleaning tank 103 in place of the conveyer roller 27. The conveyer roller 37 is substantially the same as the conveyer roller 27.

The conveyer rollers 25, 29, 307, 311, 317, 321 are made of a conductive material. Other conveyer rollers in the conveyer roller group, except for shaft portions thereof, are made of elastomer. The conveyer roller group conveys an electrode precursor 73, which will be described later, along a specific path. The path along which the conveyer roller group conveys the electrode precursor 73 extends from the supply roll 47, passes through the electrolyte solution tank 203, the electrolyte solution tank 205, the electrolyte solution tank 7, the electrolyte solution tank 207, and the cleaning tank 103 in this order, and reaches the winding roll 49.

A portion of the path passing through the electrolyte solution tank 203 first goes downward between the inner surface of the electrolyte solution tank 203 and the partition plate 69, then is changed in direction of movement to upward by the conveyer roller 17, and finally moves upward between the inner surface of the electrolyte solution tank 203 and the partition plate 69 facing the inner surface of the electrolyte solution tank 203.

A portion of the above-described path passing through the electrolyte solution tank 205 first goes downward through the space 71 between the porous insulating member 53 attached along the inner surface of the electrolyte solution tank 205 and the porous insulating member 53 beside the partition plate 69 facing the former porous insulating member 53, then is changed in direction of movement to upward by the conveyer roller 27, and finally moves upward through the space 71 between the porous insulating member 53 attached along the inner surface of the electrolyte solution tank 205 and the porous insulating member 53 beside the partition plate 69 facing the former porous insulating member 53.

A portion of the above-described path passing through the electrolyte solution tank 7 first goes downward through the space 71 between the porous insulating member 53 attached along the inner surface of the electrolyte solution tank 7 and the porous insulating member 53 beside the partition plate 69 facing the former porous insulating member 53, then is changed in direction of movement to upward by the conveyer roller 109, and finally moves upward through the space 71 between the porous insulating member 53 attached along the inner surface of the electrolyte solution tank 7 and the porous insulating member 53 beside the partition plate 69 facing the former porous insulating member 53.

A portion of the above-described path passing through the electrolyte solution tank 207 first goes downward through the space 71 between the porous insulating member 53 attached along the inner surface of the electrolyte solution tank 207 and the porous insulating member 53 beside the partition plate 69 facing the former porous insulating member 53, then is changed in direction of movement to upward by the conveyer roller 119, and finally moves upward through the space 71 between the porous insulating member 53 attached along the inner surface of the electrolyte solution tank 207 and the porous insulating member 53 beside the partition plate 69 facing the former porous insulating member 53.

A portion of the above-described path passing through the cleaning tank 103 first goes downward between the inner surface of the cleaning tank 103 and the partition plate 69, then is changed in direction of movement to upward by the conveyer roller 37, and finally goes upward between the inner surface of the cleaning tank 103 and the partition plate 69.

The supply roll 47 has the electrode precursor 73 wound around the outer circumference thereof. That is, the supply roll 47 holds the electrode precursor 73 in a wound state. The conveyer roller group draws out and conveys the electrode precursor 73 held by the supply roll 47.

The winding roll 49 winds up and keeps the electrode 75 conveyed by the conveyer roller group. The electrode 75 is manufactured by pre-doping the electrode precursor 73 with alkali metal in the electrolyte solution tanks 205, 7, 207.

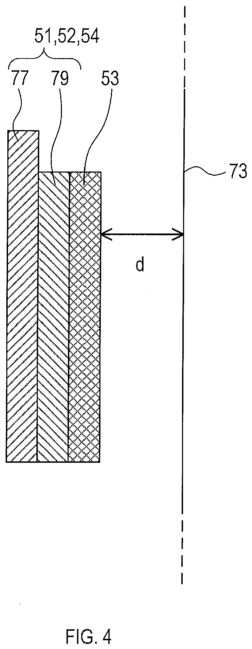

The counter electrode members 51, 52, 54 have a plate-like shape. As shown in FIG. 4, the counter electrode members 51, 52, 54 have a configuration in which a conductive base material 77 and an alkali metal containing plate 79 are stacked. Examples of the material for the conductive base material 77 include copper, stainless steel, and nickel. The form of the alkali metal containing plate 79 is not particularly limited, and examples thereof include an alkali metal plate and an alkali metal alloy plate. The thickness of the alkali metal containing plate 79 may be, for example, 0.03 mm to 3 mm.

The porous insulating members 53 have a plate-like shape. The porous insulating members 53, as shown in FIG. 4, are stacked on the alkali metal containing plate 79, and attached to the surfaces of the counter electrode members 51, 52, 54. The plate-like shape of the porous insulating members 53 is a shape when the porous insulating members 53 are attached to the surfaces of the counter electrode members 51, 52, 54. The porous insulating members 53 may be members that self maintains the given shape, or may be members, such as nets, that can be easily deformed.

As shown in FIG. 4, the porous insulating member 53 and the electrode precursor 73 conveyed by the conveyer roller group do not contact with each other. The shortest distance d from the surface of the porous insulating member 53 to the electrode precursor 73 is preferably in the range of 0.5 mm to 100 mm, and particularly preferably in the range of 1 mm to 10 mm. The shortest distance d is a distance between a point on the surface of the porous insulating member 53 that is closest to the electrode precursor 73 and the electrode precursor 73.

The porous insulating members 53 are porous. Accordingly, a dope solution, which will be described later, can pass through the porous insulating members 53. This allows the counter electrode members 51, 52, 54 to contact the dope solution.

An example of the porous insulating member 53 may be resin mesh. Examples of the resin include polyethylene, polypropylene, nylon, polyether ether ketone, and polytetrafluoroethylene. The aperture size of the mesh can be suitably set and may be, for example, 0.1 µm to 10 mm, and preferably in the range of 0.1 mm to 5 mm. The thickness of the mesh can be suitably set and may be, for example, 1 µm to 10 mm, and preferably in the range of 30 µm to 1 mm. The opening ratio of the mesh can be suitably set and may be, for example, 5% to 98%, preferably 5% to 95%, and more preferably in the range of 50% to 95%.

The porous insulating member 53 may be entirely made of an insulating material, or may partially comprise an insulating layer.

The supporting tables 55 support the electrolyte solution tanks 203, 205, 7, 207 and the cleaning tank 103 from below. The height of the supporting tables 55 can be changed. When the supporting table 55 supporting the electrolyte solution tank 205 is lowered while the positions of the partition plate 69, the counter electrode members 51, and the porous insulating member 53 in the up-down direction are maintained, the electrolyte solution tank 205 can be moved downward relative to the partition plate 69, the counter electrode members 51, and the porous insulating member 53, as shown in FIG. 2. When the supporting table 55 is raised, the electrolyte solution tank 205 can be moved upward relative to the partition plate 69, the counter electrode members 51, and the porous insulating member 53. The supporting tables 55 supporting the electrolyte solution tanks 203, 7, 207 and the cleaning tank 103 have the same function.

The circulation filter 57 is provided to the respective electrolyte solution tanks 203, 205, 7, 207. The circulation filter 57 comprises a filter 81, a pump 83, and a piping 85.

In the circulation filter 57 provided to the electrolyte solution tank 203, the piping 85 is a circulation piping that extends from the electrolyte solution tank 203, sequentially passes through the pump 83 and the filter 81, and returns to the electrolyte solution tank 203. The dope solution in the electrolyte solution tank 203 circulates in the piping 85 and the filter 81 and returns again to the electrolyte solution tank 203 due to the driving force of the pump 83. At this time, impurities and the like in the dope solution are filtered by the filter 81. The impurities include impurities precipitated from the dope solution, and impurities produced from the electrode precursor 73. Examples of the material for the filter 81 may include resin such as polypropylene and polytetrafluoroethylene. The pore diameter of the filter 81 can be suitably set and may be, for example, 30 µm to 50 µm.

The circulation filters 57 of the electrolyte solution tanks 205, 7, 207 have the same functions and effects. In FIGS. 1 and 2, illustration of the dope solution is omitted for convenience.

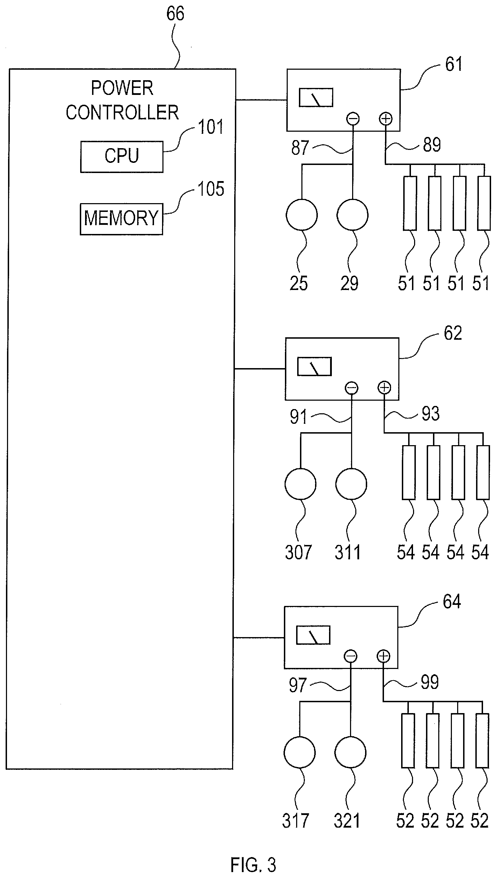

As shown in FIG. 3, the negative terminal of the direct current power source 61 is connected to each of the conveyer rollers 25, 29 via the cable 87. The positive terminal of the direct current power source 61 is connected to each of four counter electrode members 51 in total via the cable 89. The electrode precursor 73 contacts the conductive conveyer rollers 25, 29. The electrode precursor 73 and the counter electrode members 51 are inside the dope solution which is the electrolyte solution. Therefore, the electrode precursor 73 and the counter electrode members 51 are electrically connected.

The direct current power source 61 flows an electric current to the counter electrode members 51 via the cables 87, 89, and the conveyer rollers 25, 29.

As shown in FIG. 3, the negative terminal of the direct current power source 62 is connected to each of the conveyer rollers 307, 311 via the cable 91. The positive terminal of the direct current power source 62 is connected to each of four counter electrode members 54 in total via the cable 93. The electrode precursor 73 contacts the conductive conveyer rollers 307, 311. The electrode precursor 73 and the counter electrode members 54 are inside the dope solution which is the electrolyte solution. Therefore, the electrode precursor 73 and the counter electrode members 54 are electrically connected.

The direct current power source 62 flows an electric current to the counter electrode members 54 via the cables 91, 93, and the conveyer rollers 307, 311.

As shown in FIG. 3, the negative terminal of the direct current power source 64 is connected to each of the conveyer rollers 317, 321via the cable 97. The positive terminal of the direct current power source 64 is connected to each of four counter electrode members 52 in total via the cable 99. The electrode precursor 73 contacts the conductive conveyer rollers 317, 321. The electrode precursor 73 and the counter electrode members 52 are inside the dope solution which is the electrolyte solution. Therefore, the electrode precursor 73 and the counter electrode members 52 are electrically connected.

The direct current power source 64 flows an electric current to the counter electrode members 52 via the cables 97, 99, and the conveyer rollers 317, 321.

The blower 63 blows gas to the electrode 75 coming out of the cleaning tank 103 to vaporize the cleaning solution, and dries the electrode 75. The gas to be used is preferably a gas inert with respect to the active material pre-doped with alkali metal. Examples of such a gas include helium gas, neon gas, argon gas, and dehumidified air from which water has been removed.

As shown in FIG. 3, the power controller 66 is electrically connected to the direct current power sources 61, 62, 64. The power controller 66 is a microcomputer comprising a CPU 101, and a semiconductor memory (hereinafter, referred to as a memory 105) such as, for example, a RAM or a ROM.

### 2. Configuration of Electrode Precursor 73

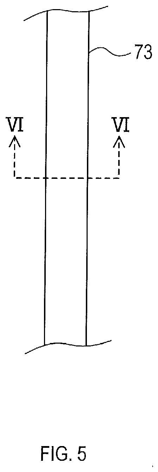

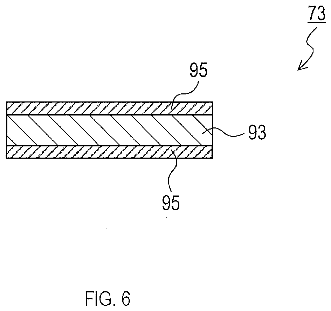

The configuration of the electrode precursor 73 will be described based on FIG. 5 and FIG. 6. The electrode precursor 73, as shown in FIG. 5, has a strip-shape. As shown in FIG. 6, the electrode precursor 73 comprises a strip-shaped current collector 93, and an active material layer 95 formed on both sides of the current collector 93.

The current collector 93 is preferably a metal foil such as copper, nickel, and stainless steel. The current collector 93 may have a conductive layer, containing a carbon material as a main component, formed on the metal foil. The thickness of the current collector 93 can be, for example, 5 to 50 µm.

The active material layer 95 can be formed, for example, by preparing a slurry containing an active material and a binder before doped with alkali metal, applying the slurry onto the current collector 93, and drying the slurry.

Examples of the binder include rubber binders such as styrene-butadiene rubber (SBR) and NBR, fluorine resins such as polytetrafluoroethylene and polyvinylidene fluoride, polypropylene, polyethylene, and fluorine-modified (meth) acrylic binder as disclosed in Japanese Unexamined Patent Application Publication No. 2009-246137.

The slurry may contain other components, in addition to the active material and the binder. Examples of the other components include conductive agents such as carbon black, graphite, vapor-grown carbon fiber, and metal powder; and thickeners such as carboxymethyl cellulose, Na salt or ammonium salt thereof, methyl cellulose, hydroxymethyl cellulose, ethyl cellulose, hydroxypropyl cellulose, polyvinyl alcohol, oxidized starch, phosphorylated starch, and casein.

The thickness of the active material layer 95 is not particularly limited, and is, for example, 5 to 500 µm, preferably 10 to 200 µm, and particularly preferably 10 to 100 µm.

The active material included in the active material layer 95 is not particularly limited as long as it is an electrode active material that can be applied to a battery or a capacitor using insertion/desorption of alkali metal ions, and it may be a negative electrode active material or may be a positive electrode active material.

The negative electrode active material is not particularly limited, and includes, for example, a carbon material such as graphite, easily graphitizable carbon, hardly graphitizable carbon, complex carbon material in which graphite particles are coated by a carbide of pitch and resin; a material including a metal or a half-metal, or an oxide thereof such as Si, Sn and the like that can be alloyed with lithium, and the like. A specific example of the carbon material includes the carbon material described in Japanese Unexamined Patent Publication No. 2013-258392. A specific example of the material including a metal or a half-metal, or an oxide thereof that can be alloyed with lithium includes a material described in Japanese Unexamined Patent Publication No. 2005-123175 and Japanese Unexamined Patent Publication No. 2006-107795.

Examples of the positive electrode active material include transition metal oxides such as activated carbon, cobalt oxide, nickel oxide, manganese oxide, and vanadium oxide, and sulfur-based active materials such as a sulfur simple material and metal sulfide.

Both the positive electrode active material and the negative electrode active material may be formed by a single substance or by mixing two or more types of substances. The electrode manufacturing apparatus 1 of the present disclosure is suitable for pre-doping the negative active material with alkali metal. In particular, it is preferable that the negative electrode active material is a carbon material or a material including Si or an oxide thereof.

The alkali metal pre-doped to the active material is preferably lithium or sodium, and lithium is particularly preferable. When the electrode precursor 73 is used for manufacturing an electrode of a lithium-ion rechargeable battery, the active material layer 95 has a density of preferably 1.50 to 2.00 g/cc, and particularly preferably 1.60 to 1.90 g/cc.

### 3. Composition of Dope Solution and Temperature

When the electrode manufacturing apparatus 1 is used, a solution containing alkali metal ions (hereinafter, referred to as a dope solution) is placed in the electrolyte solution tanks 203, 205, 7, 207.

The dope solution contains alkali metal ions and a solvent. An example of the solvent may be an organic solvent. The organic solvent is preferably an aprotic organic solvent. Examples of the aprotic organic solvent include ethylene carbonate, propylene carbonate, butylene carbonate, dimethyl carbonate, diethyl carbonate, methyl ethyl carbonate, 1-fluoroethylene carbonate, γ-butyrolactone, acetonitrile, dimethoxyethan, tetrahydrofuran, dioxolane, methylene chloride, sulfolane, diethylene glycol dimethyl ether (diglyme), diethylene glycol methyl ethyl ether, triethylene glycol dimethyl ether (triglyme), triethylene glycol butyl methyl ether, and tetraethylene glycol dimethyl ether (tetraglyme).

Ionic solutions such as quaternary imidazolium salt, quaternary pyridinium salt, quaternary pyroridinium salt, and quaternary piperidinium salt can be also used as the organic solvent. The organic solvent may consist of a single component, or may be a mixed solvent containg two or more types of components.

The alkali metal ions contained in the above-described dope solution are ions that make up alkali metal salt. The alkali metal salt is preferably lithium salt or sodium salt. Examples of an anionic part making up the alkali salt include phosphorous anion including fluoro group such as PF₆⁻, PF₃(C₂F₅)₃⁻, and PF₃(CF₃)₃⁻; boron anion including fluoro group or cyano group such as BF₄⁻, BF₂(CF)₂⁻, BF₃(CF₃)⁻, and B(CN)₄⁻; sulfonyl imide anion including fluoro group such as N(FSO₂)₂⁻, N(CF₃SO₂)₂⁻, and N(C₂F₅SO₂)₂⁻; and organic sulfone acid anion including fluoro groups such as CF₃SO₃⁻.

The concentration of the alkali metal salt in the dope solution is preferably 0.1 mol/L or higher, and more preferably 0.5 to 1.5 mol/L. If the concentration of the alkali metal salt in the dope solution is within the above-described range, pre-doping with alkali metal efficiently progresses.

The dope solution may further contain an additive/additives such as vinylene carbonate, vinyl ethylene carbonate, 1-fluoroethylene carbonate, 1-(trifluoromethyl) ethylene carbonate, succinic anhydride, maleic anhydride, propanesultone, and diethyl sulfone.

The above-described dope solution may further contain a flame retardant such as a phosphazene compound. As in the electrode manufacturing method of the present disclosure, when the active material is doped with alkali metal in a specific oxygen concentration atmosphere, an added amount of the flame retardant can be lower than before. In the case of adding a flame retardant, the lower limit of the added amount of the flame retardant is not specifically limited. However, from the viewpoint of effectively controlling the thermal runaway reaction at the time of doping with alkali metal, the added amount of the flame retardant is preferably 0.01 part by mass or more, more preferably 0.03 parts by mass or more, and still more preferably 0.05 parts by mass or more, with respect to 100 parts by mass of the dope solution. From the viewpoint of obtaining a high-quality doped electrode, the added amount of the flame retardant is preferably 1 parts by mass or less, more preferably 0.8 parts by mass or less, and still more preferably 0.5 parts by mass or less, with respect to 100 parts by mass of the dope solution. The temperature of the dope solution when pre-doping is performed is preferably 25°C or more and 50°C or less.

### 4. Manufacturing Method for Electrode 75 Using Electrode Manufacturing Apparatus 1

First, as a preparation for manufacturing the electrode 75, the following is performed. The electrode precursor 73 is wound around the supply roll 47. Next, the electrode precursor 73 is drawn out from the supply roll 47 by the conveying roller group, and is fed to the winding roll 49 along the above-mentioned path. Then, the electrolyte solution tanks 203, 205, 7, 207, and the cleaning tank 103 are raised and set in place shown in FIG. 1. The dope solution is placed in the electrolyte solution tanks 203, 205, 7, 207. The dope solution is as mentioned in "3. Composition of Dope Solution" described above. The cleaning solution is placed in the cleaning tank 103. The cleaning solution is an organic solvent. As a result, the spaces 71 of the electrolyte solution tanks 203, 205, 7, 207 are filled with the electrolytic solution. The space 71 of the cleaning tank 103 is filled with the cleaning solution.

Next, the electrode precursor 73 fed from the supply roll 47 to the winding roll 49 by the conveying roller group is drawn out from the supply roll 47 toward the winding roll 49, and conveyed along the above-mentioned path. When the electrode precursor 73 passes through the electrolyte solution tanks 205, 7, 207, the active material included in the active material layer 95 is pre-doped with alkali metal.

During the pre-doping, the oxygen concentration in the atmosphere in the chamber 10 is 1 volume% or more and 18 volume% or less. That is, the chamber 10 sets the oxygen concentration in the atmosphere in the chamber 10 to be 1 volume% or more and 18 volume% or less. The atmosphere in the chamber 10 is the atmosphere in the electrolyte solution tanks 205, 7, 207. The inside of the chamber 10 corresponds to the inside of the electrode manufacturing apparatus 1. The chamber 10 corresponds to an atmosphere setting part.

The oxygen concentration in the atmosphere in the chamber 10 is preferably 3 volume% or more, and more preferably 5 volume% or more. The oxygen concentration in the atmosphere in the chamber 10 is preferably 15 volume% or less, more preferably 12 volume% or less, and still more preferably 11.5 volume%. By setting the oxygen concentration in the atmosphere in the chamber 10 within the aforementioned range, flammability of the dope solution can be reduced, and performance of the electrode doped with alkali metal can be improved.

Also, the nitrogen concentration in the atmosphere in the chamber 10 is preferably 30 volume% or more, more preferably 40 volume% or more, and still more preferably 50 volume% or more. The nitrogen concentration in the atmosphere in the chamber 10 is preferably 97 volume% or less, more preferably 95 volume% or less, and still more preferably 88 volume% or less. Setting the nitrogen concentration within the aforementioned range, performance of the electrode doped with alkali metal can be improved.

The atmosphere in the chamber 10 can further contain noble gas such as helium gas and argon gas. When the atmosphere in the chamber 10 contains noble gas, the noble gas concentration is preferably 10 volume% or more, more preferably 20 volume% or more, still more preferably 30 volume% or more. The noble gas concentration in the atmosphere in the chamber 10 is preferably 80 volume% or less, more preferably 75 volume% or less, and still more preferably 70 volume% or less. By setting the noble gas concentration in the atmosphere in the chamber 10 within the aforementioned range, performance of the electrode doped with alkali metal can be improved.

The pressure of atmosphere in the chamber 10 is preferably 0.1 × 10⁵ N/m² or more and 5 × 10⁵ N/m² or less. By setting the pressure in the atmosphere in the chamber 10 within the aforementioned range, flammability of the dope solution can be reduced, and performance of the electrode doped with alkali metal can be improved.

During the pre-doping, the temperature of the dope solution stored in the electrolyte solution tanks 205, 7, 207 is preferably 25°C or more and 50°C or less.

By pre-doping the active material with the alkali metal, the electrode precursor 73 becomes the electrode 75. The electrode 75 is cleaned in the cleaning tank 103 while being conveyed by the conveying roller group. Finally, the electrode 75 is wound around the winding roll 49.

The electrode 75 manufactured using the electrode manufacturing apparatus 1 may be a positive electrode or a negative electrode. In the case of manufacturing a positive electrode, the electrode manufacturing apparatus 1 dopes the positive electrode active material with the alkali metal, and in the case of manufacturing a negative electrode, the electrode manufacturing apparatus 1 dopes the negative electrode active material with the alkali metal.

When lithium is occluded in the negative electrode active material of the lithium ion capacitor, the doping amount of the alkali metal is preferably 70 to 95% with respect to a theoretical capacity of the negative electrode active material. When lithium is occluded in the negative electrode active material of the lithium-ion rechargeable battery, the doping amount of the alkali metal is preferably 10 to 30% with respect to the theoretical capacity of the negative electrode active material.

### 5. Manufacturing Method for Power Storage Device

The power storage device comprises an electrode cell. Examples of the power storage device include a capacitor, and a battery. The capacitor is not particularly limited as long as the capacitor uses insertion/desorption of alkali metal ions. Examples of the capacitor include a lithium ion capacitor, a sodium ion capacitor, and the like. Among the foregoing, a lithium ion capacitor is preferable.

The basic configuration of the positive electrode constituting the capacitor may be a general configuration. As the positive electrode active material, activated carbon is preferably used.

The form of the electrolyte constituting the capacitor is usually a liquid electrolyte solution. The basic configuration of the electrolyte solution is the same as that of the above-described dope solution. In addition, the concentration of the alkali metal ions (alkali metal salt) in the electrolyte is preferably 0.1 mol/L or more, and more preferably in the range of 0.5 to 1.5 mol/L. The electrolyte have a gel or solid form for the purpose of suppressing leakage.

The capacitor has a separator disposed between the positive electrode and the negative electrode to restrain physical contact between the positive electrode and the negative electrode. Examples of the separator may include non-woven cloth or a porous film made from cellulose rayon, polyethylene, polypropylene, polyamide, polyester, and polyimide.

Example of the structure of the capacitor may include a laminated type cell in which three or more plate-like constituent units each including a positive electrode, a negative electrode, and a separator therebetween are stacked to form a stacked body and the stacked body is enclosed in an exterior film.

Example of the structure of the capacitor may include a winding type cell in which strip-shaped constituent units each including a positive electrode, a negative electrode, and a separator therebetween are wound to form a stacked body and the stacked body is accommodated in a a squared or cylindrical container.

The capacitor can be manufactured, for example, by forming a basic structure including at least the negative electrode and the positive electrode and injecting the electrolyte into the basic structure.

In the case of the lithium ion capacitor, the density of the active material layer is preferably 0.50 to 1.50 g/cc, and particularly preferably 0.70 to 1.20 g/cc.

The battery is not particularly limited as long as it is a battery that uses insertion/desorption of alkali metal ions, and may be a non-rechargeable battery or a rechargeable battery. Examples of the battery include a lithium ion rechargeable battery, a sodium ion rechargeable battery, and an air battery. Among the foregoing, the lithium ion rechargeable battery is preferable.

The basic configuration of the positive electrode constituting the battery may be a general configuration. As the positive electrode active material, besides those already exemplified, an organic active material such as a nitroxy radical compound or oxygen can also be used.

The configuration of the electrolyte constituting the battery and the configuration of the battery itself are the same as that of the capacitor. The battery can be manufactured, for example, by forming a basic structure including at least the negative electrode and the positive electrode and injecting the electrolyte into the basic structure.

In the manufacturing method for a power storage device of the present disclosure, a negative electrode is first manufactured by the method described above in "4. Manufacturing Method for Electrode 75 Using Electrode Manufacturing Apparatus 1." Then, an electrode cell is formed by sequentially stacking the negative electrode, a separator, and an electrode different from the negative electrode.

### 6. Effect of Electrode Manufacturing Method

(1A) In the electrode manufacturing method of the present disclosure, the active material is doped with alkali metal using a dope solution containing alkali metal ions in the atmosphere with the oxygen concentration of 1 volume% or more and 18 volume% or less. Therefore, the dope solution is less likely to be ignited. Modification of alkali metal doped to the active material can be restrained. Examples of the modification include modification of doped lithium into lithium nitride.

(IB) In the electrode manufacturing method the present disclosure, the active material can be doped with alkali metal using a dope solution containing alkali metal ions in the atmosphere with the oxygen concentration of 3 volume% or more and 15 volume% or less. In this case, the dope solution is much less likely to be ignited. Also, modification of alkali metal doped to the active material can be much more restrained.

(1C) In the electrode manufacturing method the present disclosure, the active material can be doped with alkali metal using a dope solution containing alkali metal ions in the atmosphere with the nitrogen concentration of 30 volume% or more and 97 volume% or less. In this case, the dope solution is much less likely to be ignited. Also, modification of alkali metal doped to the active material can be much more restrained.

(1D) In the electrode manufacturing method the present disclosure, the temperature of the dope solution at the time of doping the active material with alkali metal can be 25°C or more and 50°C or less. In this case, the dope solution is much less likely to be ignited. Also, modification of alkali metal doped to the active material can be much more restrained.

(1E) In the electrode manufacturing method the present disclosure, the pressure of the atmosphere at the time of doping the active material with alkali metal can be 0.1 × 10⁵ N/m² or more and 5 × 10⁵N/m² or less. In this case, the dope solution is much less likely to be ignited. Also, modification of alkali metal doped to the active material can be much more restrained.

(IF) In the manufacturing method for the power storage device of the present disclosure, when a negative electrode is manufactured, the negative electrode active material is doped with alkali metal using a dope solution containing alkali metal ions in the atmosphere with an oxygen concentration of 1 volume% or more and 18 volume% or less. Therefore, the dope solution is less likely to be ignited. Also, modification of alkali metal doped to the negative electrode active material can be restrained.

### 7. Examples

The present disclosure will be described further in detail using Examples and Comparative Examples below.

### [Example 1-1]

### (1-1A) Fabrication of Electrode 75

A long strip-shaped negative electrode current collector was prepared. The dimension of the negative electrode current collector is 150 mm in width, 100 m in length, and 8 µm in thickness. The surface roughness Ra of the negative electrode current collector is 0.1 µm. The negative electrode current collector is made of a copper foil. As shown in FIG. 6, the negative electrode active material layer 95 was formed on both surfaces of the negative electrode current collector 93 to obtain the electrode precursor 73. The negative electrode active material layers 95 have a thickness of 80 µm. The negative electrode active material layers 95 are formed along a longitudinal direction of the negative electrode current collector 93. The negative electrode active material layers 95 are formed in the central portion of the negative electrode current collector 93 in the width direction to extend 120 mm in width. Negative electrode active material layer unformed portion at both ends of the negative electrode current collector 93 in the width direction are each 15 mm. The negative electrode active material layer unformed portions are portions in which the negative electrode active material layers 95 are not formed.

The negative electrode active material layers 95 each contain graphite, carboxymethyl cellulose, acetylene black, the binder, and a dispersant at the mass ratio of 88:3:5:3:1. Graphite corresponds to the negative electrode active material, and corresponds to a carbon-based material. Acetylene black corresponds to the conductive agent.

Subsequently, the counter electrode member 51 was fabricated as follows. First, a long copper plate having a thickness of 2 mm was prepared. On the copper plate, a lithium metal plate was attached. The lithium metal plate was 120 mm in width, 800 mm in length, and 1 mm in thickness. The lithium metal plate is attached along a longitudinal direction of the copper plate. The copper plate with the lithium metal plate attached in this way forms the counter electrode member 51. Eight pieces of identical counter electrode members 51 were fabricated. The counter electrode member 51 corresponds to the lithium electrode.

The electrode manufacturing apparatus 1 shown in FIG. 1 was prepared. The electrode precursor 73 and the counter electrode member 51 were installed in the chamber 10. Then, the electrolyte solution was supplied into the electrolyte solution tanks 203, 205, 7, 207 of the electrode manufacturing apparatus 1. The electrolyte solution contained 1.2 M of LiPF₆. The solvent of the electrolyte solution is a mixed solvent containing ethylene carbonate, ethyl methyl carbonate, and dimethyl carbonate at a volume ratio of 3:4:3.

Subsequently, the electrode precursor 73 and the counter electrode member 51 installed in the electrode manufacturing apparatus 1 were connected to the direct current power sources with current voltage monitors, and while the electrode precursor 73 is conveyed at a speed of 0.16 m/min, a 40 A current was applied. The atmosphere in the chamber 10 during the application of the current was adjusted so that the oxygen concentration is 10 volume%, the nitrogen concentration is 90 volume%, and the temperature is 25°C. The temperature of the electrolyte solution was set to 40°C. The energization time was set, in consideration of irreversible capacity, to a time within which a ratio of doping the negative electrode active material layer 95 with lithium became 70% of a discharge capacity C2 of the negative electrode. The irreversible capacity has been estimated in advance by measuring the discharge capacity of the lithium doped negative electrode. By this process, the negative electrode active material in the negative electrode active material layer 95 was doped with lithium, and thereby the electrode precursor 73 was made into the electrode 75. In the present example, and the respective examples and comparative examples to be described later, the electrode 75 is a negative electrode for a lithium ion capacitor.

The electrode 75 was let pass through the cleaning tank 103 storing EMC (ethyl methyl carbonate) at 25°C. Thereafter, the electrode 75 was wound up on the winding roll 49, and stored for 7 hours. The electrode 75 was fabricated as described above.

### (1-1B) Evaluation Method and Evaluation Result of Appearance Evaluation of Electrode 75

Appearnce of the electrode 75 obtained in the above-described (1-1A) was observed. In the electrode 75, if discoloration to black was not observed, the electrode was rated as "A", if discoloration to black was observed in some areas of the electrode 75, the electrode was rated as "B", and if discoloration to black was observed on the entire surface of the electrode 75, the electrode was rated as "C". The evaluation results are shown in Table 1.

**[Table 1]**

| | Oxygen Concentration | Nitrogen Concentration | Temperature | Electrolyte Solution Temperature | Appearance Change | Discharge Capacity |
|---|---|---|---|---|---|---|
| | (volume%) | (volume %) | (°C) | (°C) | | (mAh) |
| Example 1-1 | 10 | 90 | 25 | 40 | A | 16.1 |
| Example 1-2 | 12 | 88 | 25 | 40 | A | 16.1 |
| Example 1-3 | 15 | 85 | 25 | 40 | A | 16.2 |
| Example 1-4 | 5 | 95 | 25 | 40 | A | 16.3 |
| Example 1-5 | 10 | 90 | 40 | 40 | A | 16.0 |
| Example 1-6 | 15 | 85 | 40 | 40 | A | 16.6 |
| Comparative Example 1-1 | 0 | 100 | 40 | 40 | C | 2.1 |
| Comparative Example 1-2 | 20 | 80 | 25 | 40 | A | 16.2 |

### (1-1C) Evaluation Method and Evaluation Result of Negative Electrode Discharge Capacity

A negative electrode in a dimention of 4.0 cm × 2.6 cm (excluding a terminal welded portion) was prepared from the electrode 75 obtained in the above-described (1-1A) through a punching method. Next, a three-electrode cell was assembled from the negative electrode fabricated in the aforementioned manner serving as a working electrode, and a lithium metal serving as a counter electrode and a reference electrode. The electrolyte solution was injected to this three-electrode cell. The electrolyte solution contains 1.2 M of LiPF₆. The solvent of the electrolyte solution is a mixed solvent containing ethylene carbonate, ethyl methyl carbonate, and dimethyl carbonate at a volume ratio of 3:4:3. Through the above processes, a cell for evaluation was completed.

The cell made for evaluation was discharged at a constant current with a current density of 0.1 mA/cm² until the negative electrode potential became 3.0 V vs. Li/Li+, and the discharge capacity was measured. The evaluation results are shown in Table 1.

### [Examples 1-2 to 1-6 and Comparative Examples 1-1 and 1-2]

The electrode was fabricated and evaluated as in Example 1-1, other than that the oxygen concentration, the nitrogen concentration, and the temperature of the atmosphere in the chamber 10, and the temperature of the electrolyte solution at the time of energization have numerical values shown in Table 1. The evaluation results are shown in Table 1.

### [Example 2-1]

Flammability was evaluated as follows. The electrolyte solution was supplied into a container. The electrolyte solution contains 1.2 M of LiPF₆. The solvent of the electrolyte solution is a mixed solvent containing ethylene carbonate, ethyl methyl carbonate, and dimethyl carbonate at a volume ratio of 3:4:3. After the electrolyte solution was added, temperature of the electrolyte solution was adjusted to 40°C. The atmosphere inside the container was that the oxygen concentration is 10 volume% and the nitrogen concentration is 9 0 volume%. The temperature inside the container was 25°C. Then, fire is set immediately after the container is opened. If no burning was observed, the electrode was rated as "A", if temporary burning was observed, the electrode was rated as "B", and if burning was observed, the electrode was rated as "C". The evaluation results were shown in Table 2.

**[Table 2]**

| | Oxygen Concentration | Nitrogen Concentration | Temperature | Electrolyte Solution Temperature | Flammability |
|---|---|---|---|---|---|
| | (volume%) | (volume %) | (°C) | (°C) | |
| Example 2-1 | 10 | 90 | 25 | 40 | A |
| Example 2-2 | 11 | 89 | 25 | 40 | A |
| Example 2-3 | 12 | 88 | 25 | 40 | B |
| Example 2-4 | 13 | 87 | 25 | 40 | B |
| Example 2-5 | 11 | 89 | 25 | 50 | A |
| Example 2-6 | 11 | 89 | 25 | 56 | A |
| Comparative Example 2-1 | 20 | 80 | 25 | 40 | C |

### [Examples 2-2 to 2-6 and Comparative Example 2-1]

Flammability was evaluated as in Example 1-1, other than that the oxygen concentration, the nitrogen concentration, and the temperature of the atmosphere inside the container, and the temperature of the electrolyte solution have numerical values shown in Table 2. The evaluation results were shown in Table 2.

### <Other Embodiments>

While embodiments of the present disclosure have been described above, the present disclosure is not limited to the above-described embodiments, and can be implemented in variously modified forms.
(1) In the first embodiment, pre-doping may be performed by the sheet-type method. In the sheet-type method, pre-doping is performed in a state in which a cut electrode plate and an alkali metal plate are disposed in a dope solution via a separator.
(2) A function of one element in each of the above-described embodiments may be shared by multiple elements, and functions of multiple elements may be performed by one element. A part of the elements in the above-described embodiments may be omitted. At least part of the elements in the above-described embodiments may be added to and/or replaced with another element in the above-described embodiments. Any and all modes encompassed by the technical thoughts specified by the language of the claims are embodiments of the present disclosure.
(3) The present disclosure can also be practiced in various forms, other than by the above-described electrode manufacturing method. Examples of such forms are an electrode manufacturing apparatus, a system comprising the electrode manufacturing apparatus as a component, and a predoping method.

## Claims

1. An electrode manufacturing method for manufacturing an electrode provided with an active material layer that contains an active material doped with alkali metal, the electrode manufacturing method comprising:
doping the active material with alkali metal using a dope solution containing alkali metal ions in an atmosphere with an oxygen concentration of 1 volume% or more and 18 volume% or less.

2. The electrode manufacturing method according to claim 1, wherein
the oxygen concentration in the atmosphere is 3 volume% or more and 15 volume% or less.

3. The electrode manufacturing method according to claim 2, wherein
a nitrogen concentration in the atmosphere is 30 volume% or more and 97 volume% or less.

4. The electrode manufacturing method according to any one of claims 1 to 3, wherein
a temperature of the dope solution is 25°C or more and 50°C or less, when the active material is doped with alkali metal.

5. The electrode manufacturing method according to any one of claims 1 to 4, wherein
a pressure of the atmosphere is 0.1 × 10⁵ N/m² or more and 5 × 10⁵ N/m² or less.

6. A manufacturing method for a power storage device that comprises an electrode cell, the manufacturing method comprising:
manufacturing a negative electrode provided with an active material layer that contains an active material doped with alkali metal by an electrode manufacturing method according to any one of claims 1 to 5; and
sequentially stacking the negative electrode, a separator, and an electrode different from the negative electrode to form the electrode cell.

7. An electrode manufacturing apparatus that manufactures an electrode provided with an active material layer that contains an active material doped with alkali metal, the electrode manufacturing apparatus comprising:
an atmosphere setting part configured to set an atmosphere inside the electrode manufacturing apparatus to have an oxygen concentration of 1 volume% or more and 18 volume% or less.
